# EUROPEAN PATENT SPECIFICATION

(11) **EP 1 599 082 B1**
(45) Date of publication and mention of the grant of the patent: **24.10.2007**
(21) Application number: 04703951.6
(22) Date of filing: 21.01.2004
(51) Int. Cl.: A01C 5/02, A01C 15/02

(54) **TOOL FOR DEPOSITING FERTILIZER UNDERGROUND**
WERKZEUG ZUM DEPONIEREN VON DÜNGEMITTEL IM GRUND
OUTIL POUR INCORPORER DE L'ENGRAIS DANS LE SOL

(30) Priority: 11.02.2003 NO 20030671
(43) Date of publication of application: 30.11.2005
(73) Proprietor: Lövmo, Hans, 8801 Sandnessjöen (NO)
(72) Inventor: Lövmo, Hans, 8801 Sandnessjöen (NO)
(74) Representative: Khan, Mohammed Saiful Azam
(86) International application number: PCT/NO2004/000014
(87) International publication number: WO 2004/071163

(56) References cited:
- US-A- 70 747
- US-A- 2 370 744
- US-A- 3 815 526
- US-A- 4 614 160
- US-A- 5 170 729

## Description

The invention relates to a device for dispensing granular, flowable material in accordance with patent claim 1.

### Background

EP-A-489367 shows a device suitable for the dispensing of granular, flowable material, which can be borne by a person and which can be used for single plant fertilization. This device comprises a conainter storage of a quantity of the material, a feed tube which is connected to the container, through which the material is fed to a dispensing apparatus removably attached to the free end of the feed tube. At its lower end the tubular dispensing apparatus comprises a dispensing lever with a lever claw. During use, the container with the material to be dispensed is borne on the back of the person concerned, while the feed tube for carrying out a single dose fertilization is held in a certain inclined position by means of a handle. In this inclined position, by pressing its lower end onto the ground, the dispensing lever releases the material which is immediately located above the dispensing lever, so that it can flow down onto the ground, whilst an area located further up in the dispensing apparatus is cut off by means of the lever claw, so that no further material can flow out of the dispensing apparatus.

The device described in patent specification EP-A-489367 is intended to use be used for, and suited to, dispensing material of the type in question, particularly artificial fertilizer, onto the ground at selected locations. Supplying material into the soil to any depth is not possible. In addition, an exact dispensing of material is not possible with this device, since the measuring out of a charge of material (dosage) does not occur separately and independently from the dispensing onto the ground. In accordance with the construction, the dosage dispensed each time varies, and is dependent on the speed with which the dispensing lever is opened while set onto the ground. It also varies dependening on the material's behaviour of flow. This is a distinct disadvantage if there are types of concentrated artificial fertilizer used which needs exact dispensing. Furthermore, the given charge of material, particularly artificial fertilizer is not optimally exploited by the plant concerned because of the material supplied onto the surface of the soil. Finally, there can be disadvantages for flora and fauna, if artificial fertilizer remains lying on the ground over a long period, due to the lack of irrigation, or the holding off of rain.

US 4,614,160 relates to a manually operated dispensing tool for repeatedly dispensing a predetermined quantity of pelletized material below the surface of the earth. The teachings of this prior art document provide that a tubular element should have an aperture to allow filling of material to be dispensed into a lower chamber. The teachings of this document do not provide any suggestion that the rod-like element should comprise a void to enable transport of material from the upper to the lower chamber.

### Aim

The aim of the present invention is to be able to carry out a single plant fertilization or similar single dose of plants, which avoids the aforementioned disadvantages of the known devices and makes it possible to dispense certain materials, with an exact dose, directly to the locate of the roots of the plant, or at least into the immediate proximity of the roots.

### Invention

To achieve the aim indicated above, a device is proposed, in accordance with the invention, of the type mentioned in the introduction, and which is carried out with the corresponding features of patent claim 1. Further advantages or suitable features are quoted in patent claims 2 to 13.

By means of the invention, a portable, compact, and manageable device is provided with which granular, flowable material, for example artificial fertilizer, can with exact and therefore economical dispensing be dispensed at a predestined depth in the soil, and directed to the local of the roots of a plant, or into their proximity. The device is easy to use and provides the possibility for simply changing the dosage and/or the depth, to which the material can be supplied into the soil.

Patent claim 2 quotes an embodiment of the device, with separating elements, which has a favourable effect on the flow of the material, and which from the bottom up, locks both chambers, which are formed in the device. Here the device is suitably designed as quoted in patent claim 3.

Quoted in patent claims 4 and 5 are two possible designs of the dispensing spaces provided in or on the rod-like element of the device.

For ensuring complete flowing out of the material located in the dispensing space a part of the surrounding border surface of the dispensing space is formed as quoted in patent claim 6.

In patent claim 7 a fundamental and suitable further design of a dispensing space is described, for the constructional realization of which a person who is skilled in the art will find different possibilities without any effort.

Another possibiliy to change the size of the whole dispensing space is quoted in patent claim 8.

In patent claim 9 a particularly advantageous design of the device according the invention is proposed, with a total arrangement of that end of the device, which comes into contact with the ground/soil, and which enables a particularly easy and energy saving use of the device also in cases of "heavy" and/or relatively hard soils.

To be able to work rapidly with the device, without having to look after the planned penetration depth of the discharging channel for the dosage of material into the soil, the device is provided with an appropriate limiting arrangement, as proposed in patent claim 10.

To further simplify and making the use of the device according the invention easier a constructional predestined limitation of the maximal distance of the reciprocating motion - the stroke- of the rod-like element is provided. For this patent claim 11 proposes a constructional simple solution.

For the filling of the device, or the container for the material integrated into the device respectively, a preferred and simple solution is mentioned in patent claim 12.

### Example

In the following, the invention is explained in more detail with the aid of figures 1 to 5, where
Figure 1 shows a front view, partly as a section, of a device in accordance with the invention,
Figure 2 shows a side view of the device in figure 1,
Figure 3 shows the other side view of the device in figures 1 and 2,
Figure 4 shows a view from above of the device in figures 1 to 3, and
Figure 5 shows a view from below of the device in figures 1 to 4.

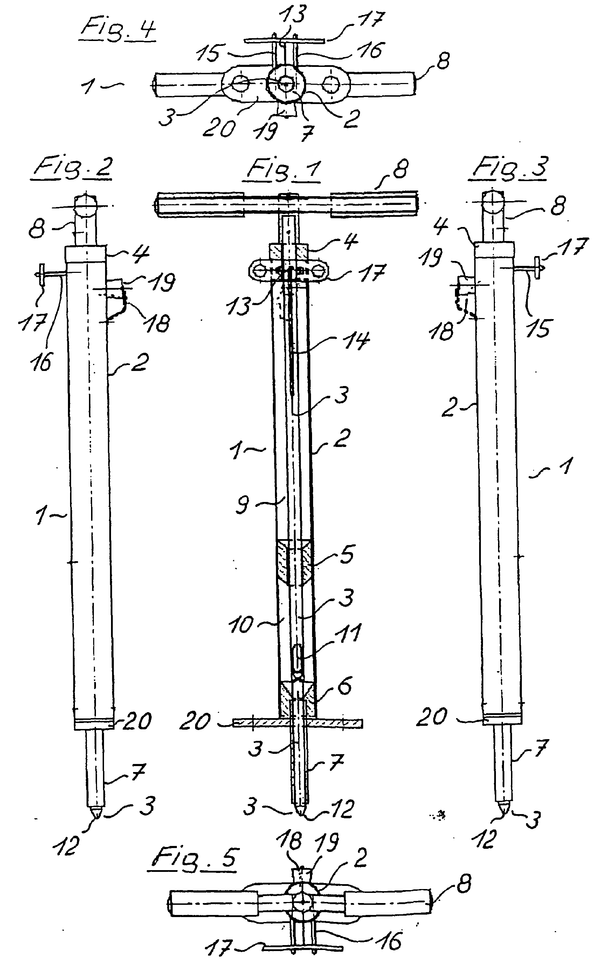

The device shown in figures 1 to 5, as indicated by the reference number 1, essentially consists of a tubular element 2, a rod-like element 3, separating elements 4, 5, 6, a pipe piece 7 and a handle 8.

These sleeve-like separating elements 4, 5, and 6 are fixed in, or on, the tubular element 2 by means of screws, and all of them contain a central opening, not described further, the cross section of which are adjusted to the cross section of the rod-like element 3 in such a way that it can be moved back and forth in relation to the tubular element 2, in its longitudinal direction, and also parallel with the tubular element.

The upper separating element 4, together with the middle one separating element 5, which is fixed inside the tubular element 2, mark the borders of a chamber 9, which forms a container for a granular, flowable material, for example artificial fertilizer, not further described.

The middle one separating element 5, together with the lower separating element 6, mark the borders of a chamber 10, which form an intermediate store for a dispensed charge of material (dosage).

At the upper end of the rod-like element 3, the handle 8 is fixed, with which the rod-like element 3 can be moved back and forth in relation to, and parallel with, the tubular element 2.

At the lower end of the tubular element 2, the pipe piece 7 is attached by fixing it in a corresponding void in the separating element 6, not further described. The pipe piece 7 has a predestined free length, with which the maximal penetration depth into the ground, or soil respectively, is determined in advance.

The lower end of the rod-like element 3, which lies opposite the handle 8, is conically shaped and, in case of the lower end-position of the rod-like element 3 shown in the drawing, rises up out of the pipe piece 7, as shown. In this way a spear-like arrangement is formed at the end, which is in contact with the ground/soil, which enables a particularly light, energy saving use of the device, especially in cases of a "heavy" and/or relatively hard ground.

For the dispensing of material which is located in the chamber 10 of the tubular element 2, a dispensing space 11 is provided, which in the example of an embodiment has the form of a slit-like void. Dispensing occurs by corresponding movements back and forth of the rod-like element 3, taking place parallel, and relative to the tubular element 2. In the course of this movement the dispensing space alternately reaches the area of chamber 9 and 10. Inside chamber 9, a certain charge of material, which is being held here as a stock, flows into the dispensing space 11, while further movement back and forth, and positioning of the dispensing space 11 in the area of chamber 10, the charge of material (dosage) in the dispensing space 11, which is being withdrawn from chamber 9, flows out of the dispensing space 11 and through the lower area of chamber 10 and flows into the pipe piece 7, which forms a discharging channel for the dosage of material. In the course of the following movements back and forth of the rod-like element, another charge of material (dosage) will be supplied from the dispensing space 11 to the chamber 10. At the same time, the dosage, which is in the pipe piece 7, will be pressed out of the pipe piece 7, and into the local area of the ground or soil respectively, with the aid of the lower end which is indicated as 12.

For adjustment and limitation of the maximal distance of the back and forth movement, including suitable positioning of the rod-like element 3 with relation to the tubular element 2, there is a fixed control pivot 13, which lies opposite the tubular element 2 in the area of the upper end of the tubular element 2, and which reaches into a groove 14 of predestined length and position, which is provided in, and extending along, the rod-like element 3. The two ends of the groove 14, in this way, form a stop for the control pivot 13, so that the stroke of the rod-like element is therefore settled in view of its length and position, relative to the tubular element.

The control pivot 13 is suitably arranged on an interlocking arrangement, which is detachably fixed on the upper end of the tubular element 2, and which comprises two interlocking pivots 15, 16. These interlocking pivots 15, 16 are fastened on a common gripper element 17 and are used for the detachable interlocking of the upper separating element 4 with the tubular element 2.

At the upper end of the tubular element 2, there is a further filler opening 18 for the material which is stored in the chamber 9. For closing of the filler opening 18, a plug 19 is used, which is fastened to the tubular element 2 with a chain or the like, so that it cannot be lost.

For a certain limitation of the penetration depth of the lower end of the device 1, that particularly means limiting the penetration depth according to the free end of the pipe piece 7, there is a limiting arrangement in the area of the lower end of the tubular element 2, at the point of transition of the free part of the pipe piece 7, which in the example of an embodiment is formed by a footplate 20. In this way this limiting arrangement gets a further, very useful function for easier use of the device, since the pipe piece 7 can be pressed down into the soil or the ground, respectively, in an easy way with the aid of the footplate 20.

For ensuring exact dispensing of the material and problem-free use of the device, it is advantageous that the separating elements 5 and 6 are formed in a funnel-shape at their sides, which turn toward the upper end of the tubular element 2, a cross section of the opening decreases toward the lower end of the tubular element 2.

Furthermore the dimensions of the outer diameter of the pipe piece 7 is chosen in such a way, that it, together with the lower part of the rod-like element 3, which if it is in the lower position fills the inner space of the pipe piece 7, means the discharging channel for the dispensed material can be pressed down into the ground or soil respectively, with the aid of manual strength.

## Claims

1. A device (1) for the dispensing of granular, flowable material, for example artificial fertilizer, and releasing a dispensed charge of material into the ground in the vicinity of a plant, with
(a) a tubular element (2);
(b) a rod-like element (3), which at the upper end has a handle (8), and which is installed axially moveable in the tubular element (2);
(c) separating elements (4,5) which are connected with the tubular element (2) and which are being penetrated by the rod-like element (3), which separating elements (4,5) together with a part of the tubular element (2) forms the upper chamber or container (9) for the material;
(d) a lower chamber or container (10) which is located next to the upper container (9), which serves as an intermediate store for dispensed material and from which material is dispensed based on the position of rod-like element (3) in the tubular element (2);
(e) a void (11) in the rod-like element (3) which enables transport of a predetermined amount of material from the upper to the lower container (9,10) in relation to the size of the void;
(f) an outlet (7) at the lower edge of the lower container (10), which can be pressed down into the ground for releasing material;
(g) the void (11) is formed as a dispensing space and is moveable with the rod-like element (3) between the upper container (9) and the lower container (10) to move the predetermined amount of material from the upper container (9) to the lower container (10); and
(h) that the outlet is formed as a pipe piece (7) which forms a discharging channel for a dispensed charge of material, for which the opening of the discharging channel has a cross-section which is adjusted to the cross-section of lower part of the rod-like element (3), so that the lower part of the rod-like element (3) in its lower end position fills the discharging channel and wherein;
(i) the device is arranged such that in the lower end position the rod-like element (3) fills the discharging channel and in a discharging position the rod-like element (3) is moved out of the discharging channel to allow material contained in the lower chamber (10) to be discharged out of the discharging channel.

2. A device according to Claim 1, wherein the separating elements (5,6) which interlock both chambers (9,10) from the underside, on its sides which turn opposite the respective chambers (9 or 10, respectively) are formed in a funnel-shape with decreasing cross section of its opening in the direction to the lower end of the tubular element (2).

3. A device according to Claim 1 and 2, wherein the pipe piece (7) is connected with the separating element (6), which at the underside interlocks the lower chamber (10) of the device (1) in such a way that the cross-section of the opening of the end of the pipe piece (7) which turns to the lower chamber (10) of the device (1) adjoin to the funnel-shaped decreasing cross-section of the opening of the mentioned separating element (6).

4. A device according to Claim 1, wherein the dispensing space (11) is formed as a slit-like or pocket-like void in the rod-like element (3), and/or that the volume of the dispensing space can be varied.

5. A device according to Claim 4, wherein the border surface of the dispensing space (11) in its lower area is inclined in relation to the longitudinal axis of the rod-like element (3).

6. A device according to Claim 1, wherein there are arranged several lockable dispensing spaces in or on the rod-like element (3).

7. A device according to Claim 1, wherein the lower end of the rod-like element (3) is arranged to decrease conically and in the lower end position the rod-like element (3) rises out of the mentioned pipe piece (7).

8. A device according to Claim 1, wherein between the lower end of the tubular element (2) and the mentioned pipe piece (7) is provided limiting means for limiting of the penetration depth of the pipe piece (7) into the ground, said limiting means is formed as a footplate or the like.

9. A device according to Claim 1, comprising means for adjustment/limitation of the maximal distance of the back and forth movement of the rod-like elements (3), the means formed by a control pivot or the like (13), which directly or indirectly is fastened to the tubular element (2) and which reaches into a groove or the like (14) with predestined length and position in the rod-like element (3), said groove extending parallel to the longitudinal extension of the rod-like element (3).

10. A device according to Claim 1, wherein the separating element (4) at the upper end of the tubular element (2) is formed to be detachable from the tubular element (2).

11. A device according to Claim 8 and 9, wherein the upper end of the tubular element (2) is fastened to an interlocking arrangement, which firstly comprises interlocking pivots (15,16) which interlock the separating element (4), which is located at the upper part of the tubular element (2), together with the tubular element (2), and which secondly comprises a control pivot (13), which reaches into the groove or the like (14) being located in the rod-like element (3), where the interlocking arrangement is detachably fixed.

12. A device according to Claim 1, wherein the tubular element (2) in the area of the upper chamber (9) comprises a lockable filler opening (18) for the material.

13. A device according to Claim 1 wherein the tubular element (2) consists of transparent material, for example Plexiglas, Lexan or the like.

## Patentansprüche

1. Vorrichtung (1) zum Dosieren von körnigem, rieselfähigem Material, z.B. Kunstdünger, und Abgeben einer dosierten Materialmenge in den Bereich des in der Nähe einer Pflanze befindlichen Bodens,
**gekennzeichnet durch**
a) ein rohrartiges Element (2),
b) ein stangenartiges Element (3), das am oberen Ende eine Handhabe (8) aufweist, und das achsparallel im rohrartigen Element (2) bewegbar ist,
c) mit dem rohrartigen Element (2) verbundene Trennelemente (4, 5), die einen Durchlaß für das stangenartige Element (3) aufweisen, und die zusammen mit dem rohrartigen Element (2) eine obere Kammer oder Behälter (9) für das Material bilden,
d) eine untere Kammer oder Behälter (10), die auf die obere Kammer (9) folgt, und die als Zwischenlager für das dosierte Material dient, und von der das Material abhängig von der Position des stangenartigen Elements (3) im rohrartigen Element (2) herausrieselt,
e) eine Ausnehmung (11) im stangenartigen Element (3), das den Transport einer vorbestimmten Materialmenge, abhängig von der Größe der Ausnehmung, aus der oberen in die untere Kammer (9, 10) ermöglicht,
f) einen Auslaß (7) am unteren Ende des unteren Behälters (10), der in den Boden gedrückt werden kann, um das Material freizugeben,
g) daß die Ausnehmung (11) als ein Dosierraum ausgebildet und im stangenartigen Element (3) zwischen dem oberen Behälter (9) und dem unteren Behälter (10) bewegbar ist, um eine vorbestimmte Materialmenge aus dem oberen Behälter (9) in den unteren Behälter (10) zu bringen, und
h) daß der Auslaß als Rohrstück (7) ausgebildet ist, der einen Abgabekanal für eine Dosiermenge (charge) des Material bildet, mit einem dem Querschnitt des unteren Bereiches des stangenartigen Elementes (3) angepaßten lichten Querschnitt, so daß der untere Bereich des stangenartigen Elements (3) in seiner unteren Endstellung den Abgabekanal ausfüllt, und
i) daß die Anordnung so ausgebildet ist, daß das stangenartige Element (3) in seiner unteren Endstellung den Abgabekanal ausfüllt und in Abgabestellung aus dem Abgabekanal herausgedrückt werden kann, um das im unteren Behälter (10) befindliche Material aus dem Abgabekanal herausrieseln zu lassen.

2. Vorrichtung nach Anspruch 1, **dadurch gekennzeichnet, daß** die die beiden Kammern (9, 10) nach unten zu abschließenden Trennelemente (5, 6) auf der der betreffenden Kammer (9 bzw. 10) zugekehrten Seite trichterartig ausgebildet sind, mit in Richtung auf das untere Ende des rohrartigen Elementes (2) zu sich verjüngendem Öffnungsquerschnitt.

3. Vorrichtung nach den Ansprüchen 1 und 2, **dadurch gekennzeichnet, daß** das Rohrstück (7) mit dem die untere Kammer (10) der Vorrichtung (1) nach unten zu abschließenden Trennelement (6) derart verbunden ist, daß der lichte Querschnitt des der unteren Kammer (10) der Vorrichtung (1) zugekehrten Endes des Rohrstückes (7) an den trichterartig verjüngten Öffnungsquerschnitt des genannten Trennelementes (6) anschließt.

4. Vorrichtung nach Anspruch 1, **dadurch gekennzeichnet, daß** der Dosierraum (11) als im stangenartigen Element vorgesehene schlitzartige oder taschenartige Ausnehmung ausgebildet ist, und/oder daß das Volumen des Dosierraumes veränderbar ist.

5. Vorrichtung nach Anspruch 4, **dadurch gekennzeichnet, daß** die Begrenzungsfläche des Dosierraumes (11) in ihrem unteren Bereich schräg zur Längsachse des stangenartigen Elementes (3) verläuft.

6. Vorrichtung nach Anspruch 1, **dadurch gekennzeichnet, daß** mehrere verschließbare Dosierräume im oder am stangenartigen Element (3) vorgesehen sind.

7. Vorrichtung nach Anspruch 1, **dadurch gekennzeichnet, daß** das untere Ende des stangenartigen Elementes (3) konisch verjüngt ist und in der unteren Endstellung des stangenartigen Elementes (3) aus dem genannten Rohrstück (7) herausragt.

8. Vorrichtung nach Anspruch 1, **dadurch gekennzeichnet, daß** zwischen dem unteren Ende des rohrartigen Elementes (2) und dem genannten Rohrstück (7) Begrenzungsmittel vorgesehen sind zum Begrenzen der Eindrücktiefe des Rohrstückes (7) in den Boden, wobei die genannten Begrenzungsmittel als Fußplatte oder dgl. ausgebildet sind.

9. Vorrichtung nach Anspruch 1, **dadurch gekennzeichnet, daß** Mittel zum Einstellen/Begrenzen des maximal möglichen Weges (Hubes) der Hin- und Herbewegung des stangenartigen Elementes (3) vorgesehen sind, und daß diese Mittel von einem direkt oder indirekt am rohrartigen Element (2) befestigten Steuerzapfen oder dgl. (13) gebildet sind, der in eine im stangenartigen Element befindliche, parallel zur Längsausdehnung des stangenartigen Elementes (3) verlaufende Nut oder dgl. (14) vorbestimmter Länge und Positionierung eingreift.

10. Vorrichtung nach Anspruch 1, **dadurch gekennzeichnet, daß** das am oberen Ende des rohrartigen Elementes (2) befindliche Trennelement (4) vom rohrartigen Element (2) abnehmbar ausgebildet ist.

11. Vorrichtung nach Ansprüchen 8 und 9, **dadurch gekennzeichnet, daß** am oberen Ende des rohrartigen Elementes (2) eine Verriegelungseinrichtung lösbar befestigt ist, die zum einen das am oberen Ende des rohrartigen Elementes (2) befindliche Trennelement (4) mit dem rohrartigen Element (2) verriegelnde Verriegelungszapfen (15, 16) aufweist, und die zum anderen einen Steuerzapfen (13) aufweist, der in die am stangenartigen Element (3) befindliche Nut oder dgl. (14) eingreift.

12. Vorrichtung nach Anspruch 1, **dadurch gekennzeichnet, daß** das rohrartige Element (2) im Bereich der oberen Kammer (9) eine verschließbare Einfüllöffnung (18) für das Material aufweist.

13. Vorrichtung nach Anspruch 1, **dadurch gekennzeichnet, daß** das rohrartige Element (2) aus durchsichtigem Material besteht, z.B. aus Plexiglas, Lexan oder dgl.

## Revendications

1. Outil (1) pour distribuer une matière granulaire fluide, par exemple un engrais artificiel, et libérer une charge distribuée de matière dans le sol à proximité d'une plante, comportant :
(a) un élément tubulaire (2),
(b) un élément à mode de tige (3) qui comporte un manche (8) à l'extrémité supérieure et qui est installé de manière à être mobile dans le sens axial à l'intérieur de l'élément tubulaire (2),
(c) des éléments de séparation (4, 5) qui sont reliés à l'élément tubulaire (2) et qui sont pénétrés par l'élément à mode de tige (3), lesquels éléments de séparation (4, 5) forment, conjointement à une pièce de l'élément tubulaire (2), la chambre ou le récipient supérieur(e) (9) de la matière,
(d) une chambre ou un récipient inférieur(e) (10) qui se trouve près du récipient supérieur (9) qui sert de stockage intermédiaire pour la matière distribuée et à partir de laquelle/duquel la matière est distribuée en fonction de la position de l'élément à mode de tige (3) dans l'élément tubulaire (2),
(e) une cavité (11) dans l'élément à mode de tige (3) qui permet le transport d'une quantité prédéterminée de matière du récipient supérieur au récipient inférieur (9, 10) en relation avec la taille de la cavité,
(f) un déversoir (7) au niveau de l'arête inférieure du récipient inférieur (10) qui peut être enfoncé dans le sol pour libérer la matière,
(g) la cavité (11) est réalisée sous la forme d'un espace de distribution et peut être déplacée avec l'élément à mode de tige (3) entre le récipient supérieur (9) et le récipient inférieur (10) pour déplacer la quantité prédéterminée de matière du récipient supérieur (9) au récipient inférieur (10) et
(h) le déversoir est réalisé sous la forme d'un segment de tuyau (7) qui forme un canal de déchargement pour une charge de matière distribuée pour lequel l'ouverture du canal de déchargement présente une section transversale qui est ajustée à la section transversale de la partie inférieure de l'élément à mode de tige (3) de telle sorte que la partie inférieure de l'élément à mode de tige (3) remplisse, dans sa position finale inférieure, le canal de déchargement et dans lequel
(i) l'outil est disposé de telle sorte que, dans la position finale inférieure, l'élément à mode de tige (3) remplisse le canal de déchargement et, dans une position de déchargement, l'élément à mode de tige (3) soit enlevé du canal de déchargement pour permettre le déchargement de la matière contenue dans la chambre inférieure (10) hors du canal de déchargement.

2. Outil selon la revendication 1, dans lequel les éléments de séparation (5, 6) qui engrènent les deux chambres (9, 10) à partir du côté inférieur, sur ses côtés qui sont opposés aux chambres respectives (9 ou 10, respectivement), sont réalisés en forme d'entonnoir avec une section transversale de son ouverture allant en diminuant, en direction de l'extrémité inférieure de l'élément tubulaire (2).

3. Outil selon les revendications 1 et 2, dans lequel le segment de tuyau (7) est relié à l'élément de séparation (6) qui, au niveau du côté inférieur, engrène la chambre inférieure (10) de l'outil (1) d'une telle manière que la section transversale de l'ouverture de l'extrémité du segment de tuyau (7) qui fait face à la chambre inférieure (10) de l'outil (1) soit adjacente à la section allant en diminuant en forme d'entonnoir de l'ouverture de l'élément de séparation mentionné (6).

4. Outil selon la revendication 1, dans lequel l'espace de distribution (11) est réalisé sous la forme d'une cavité à mode de fente ou de poche dans l'élément à mode de tige (3) et/ou le volume de l'espace de distribution peut être modulé.

5. Outil selon la revendication 4, dans lequel la surface de bordure de l'espace de distribution (11) est inclinée, dans sa zone inférieure, par rapport à l'axe longitudinal de l'élément à mode de tige (3).

6. Outil selon la revendication 1, dans lequel on a disposé plusieurs espaces de distribution verrouillables dans ou sur l'élément à mode de tige (3).

7. Outil selon la revendication 1, dans lequel l'extrémité inférieure de l'élément à mode de tige (3) est disposée de manière à diminuer à la façon d'un cône et, dans la position finale inférieure, l'élément à mode de tige (3) s'élève hors du segment de tuyau mentionné (7).

8. Outil selon la revendication 1, dans lequel, entre l'extrémité inférieure de l'élément tubulaire (2) et le segment de tuyau mentionné (7), on a prévu un moyen de limitation pour limiter la profondeur de pénétration du segment de tuyau (7) dans le sol, ledit moyen de limitation est réalisé sous la forme d'une plateforme ou d'un objet similaire.

9. Outil selon la revendication 1, comportant des moyens d'ajustement/de limitation de la distance maximale du mouvement arrière et avant des éléments à mode de tige (3), le moyen formé par un pivot de commande ou un objet similaire (13) qui est fixé directement ou indirectement à l'élément tubulaire (2) et qui pénètre dans une rainure ou un élément similaire (14) avec une longueur et une position prédéfinies dans l'élément à mode de tige (3), ladite rainure s'étendant parallèlement à l'extension longitudinale de l'élément à mode de tige (3).

10. Outil selon la revendication 1, dans lequel l'élément de séparation (4), au niveau de l'extrémité supérieure de l'élément tubulaire (2), est réalisé de manière à pouvoir être détaché de l'élément tubulaire (2).

11. Outil selon les revendications 8 et 9, dans lequel l'extrémité supérieure de l'élément tubulaire (2) est fixée à une structure d'engrènement qui comprend en premier lieu des pivots d'engrènement (15, 16) qui engrènent l'élément de séparation (4), qui est situé au niveau de la partie supérieure de l'élément tubulaire (2), conjointement à l'élément tubulaire (2), et qui comprend en second lieu un pivot de commande (13) qui pénètre dans la rainure ou un élément similaire (14) étant situé(e) dans l'élément à mode de tige (3), dans lequel la structure d'engrènement est fixée de manière détachable.

12. Outil selon la revendication 1, dans lequel l'élément tubulaire (2), dans la zone de la chambre supérieure (9), comprend une ouverture de remplissage verrouillable (18) pour la matière.

13. Outil selon la revendication 1, dans lequel l'élément tubulaire (2) est composé d'un matériau transparent, par exemple de Plexiglas, de Lexan ou d'un matériau similaire.
